(19)

Europäisches
Patentamt
European
Patent Office
Office européen
des brevets

(11) **EP 2 059 039 A1**

(12) **EUROPEAN PATENT APPLICATION**

(43) Date of publication:
**13.05.2009 Bulletin 2009/20**

(51) Int Cl.:
***H04N 5/913*** (2006.01)          ***H04N 9/64*** (2006.01)

(21) Application number: **07301519.0**

(22) Date of filing: **31.10.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Thomson Licensing
92100 Boulogne-Billancourt (FR)**

(72) Inventors:
• **Thiebaud, Sylvain
35530 Noyal sur Vilaine (FR)**
• **Sacre, Jean-Jacques
35410 Chateaugiron (FR)**

(74) Representative: **Ruellan-Lemonnier, Brigitte
Thomson multimedia
Patent Department
46 Quai A. Le Gallo
92648 Boulogne Cedex (FR)**

(54) **Global anticamcorder projection system and method**

(57)     Method of displaying images on a projection screen (1) in front of a place for an audience (2), by using different visually-equivalent metameric colors for different portions of images, and by simultaneously illuminating said place for the audience with perturbing infrared radiations and by simultaneously detecting any image capture device (6) in the place for the audience (2), wherein :

- the different metameric colors that are visually-equivalent have different spectral wavelength distributions at least in the red region of wavelengths,
- detection is performed through the perturbing infrared radiations that are reflected by any object in the place for the audience (2).

Such a system seems impossible to circumvent by pirates using camcorders.

Fig.2

EP 2 059 039 A1

**Description**

The invention concerns an image projection system of the type which is used in movie theaters, that is adapted to prevent from the illegal copy or piracy of projected images, and/or to detect and even locate, among the audience, any attempt of piracy of the projected images by using a camcorder.

Several anti-piracy image display systems and methods are known, as detailed below.

A first known anti-piracy image display system and method is based on metamerism. Colour images are generally displayed using three primaries : red, green and blue; the document WO2006/076174 (KODAK) discloses a display device having four primaries that are capable of producing metamerically matched color stimuli ; portions of an image or of a series of images (image sequence) are processed such that visually equivalent colors in two or more of these image portions are displayed by different combinations of primaries that differ globally in their spectral distribution.

Metameric colors are defined as colors having the same coordinates in a visual color space (i.e. as having the same visual color) although having different spectral wavelength distribution. Consequently, colors that are "visually" metameric will be "perceptually indistinguishable to a viewer in the audience, at least to a viewer with normal color vision. Because such metameric colors have the same coordinates in visual color spaces, as the 1931-CIE XYZ color space or the uniformly perceptual LAB or LUV color spaces, they cannot then be differentiated by the human eye, although they have different spectral distributions. Such an image metameric display method, when used in a projection display in a movie theater, can be very useful to defeat camcorder piracy, as disclosed in WO2006/076174 (KODAK), WO2004/040899 (Qdesign), EP1590783 (PHILIPS) and EP1414250 (SONY). In these documents, the metameric display method requires the processing of portions of image or series of images such that visually equivalent colors (i.e. "human eye" metameric colors) are displayed by using different combinations of at least four primaries to display different portions of an image or different images of this series, wherein these different combinations differ globally in their spectral distribution. Consequently, this processing alters the spectral content of the images to display in a manner that is metameric to the human eye and that is hopefully not metameric to an image capture device, then allowing the prevention of illegal copy of these images by this image capture device. Such an image capture device should have preferably a spectral sensitivity that is different from the spectral sensitivity of the human eye. Consequently, the alterations of the visual images, which are imperceptible to the human eye when they are directly displayed, are indeed perceptible when they are indirectly displayed, i.e. displayed through a copy that is captured by the image capture device.

As the largest differences in spectral sensitivity between the "human eye" and the usual image capture devices (as camcorders) are in the red and short infrared wavelength region, it is preferable to alter metamerically the spectral content of the images to display in this red and short infra-red spectral region. In order to defeat this anti-piracy red-and-IR metameric image display method, the pirate may add an adapted IR filter in front of his camcorder in order to get a camcorder with a spectral sensitivity that is closer to that of the human eye in the red and IR region. Therefore, by adding an IR filter, the pirate may at least limit the efficiency of the anti-piracy metameric measure.

A second known anti-piracy image display system and method is based on infra-red overlighting of the audience (US6742901 - SONY, US2002-171813) and/or projecting infrared spots, patterns or images on the projection screen (US6018374 - MACROVISION, EP1460741 - PHILIPS, US2004-091110,

US6771349). Again, as image capture devices are far more sensitive in this wavelength region than the human eye, regular displayed images will superimpose with infrared spots, patterns, images or overlighting on the camcorder's imager, then providing jammed captured images. Again, by adding an appropriate IR filter, the pirate may prevent the capture of these infrared spots, patterns, images or overlighting, and totally or partially cancel the efficiency of the anti-piracy IR-based measure. In WO2007-081392 (THOMSON), it is proposed to vary continuously the wavelength of the invisible jamming wavelength to create projected invisible light variations that are picked up by the camcorder's imager such that any attempt to place a filter blocking lens on the camcorder to block the distorting invisible light variations will fail to capture the entire range of wavelength variations in the distorting light. Such an invisible light variations measure is rather expensive to implement.

A third known anti-piracy image display system and method is based on the detection of image capture devices in movie theaters as disclosed in WO2007/005888 and in US2006-033017. But such systems are expensive and not always very reliable. As theater companies are watching audiences more closely to detect use of camcorders, some theaters are offering employees rewards for detecting image recorders and providing them with infrared glasses so they can easily scan for offenders. Such a detection method is very cheap but not always very reliable and may easy to circumvent, again with IR filters or shields.

An aim of the invention is to overcome simultaneously the aforementioned drawbacks by a combination of these known anti-piracy image display systems and methods and by selecting the red colors for the metamerization effect.

For this purpose, the subject of the invention is a method of displaying a series of images on a projection screen in front of a place for an audience, by using different visually-equivalent metameric colors for different portions of images of said series and/or for different images of said series, and by simultaneously illuminating said place for the audience with perturbing infrared radiations and by simultaneously detecting any image capture device in the place for the audience, wherein :

- said different metameric colors that are visually-equivalent have different spectral wavelength distributions at least in the red region of wavelengths,
- said detection is performed through said perturbing infrared radiations that are reflected by any object in the place for the audience.

Because of the infrared illumination of the audience, if a pirate stands in the audience within a camcording filming the displayed images on the projection screen, a perturbation is generated on the camcorder's imager. Then, the pirate has two solutions to protect his camcorder against this perturbing infrared radiations :

- the pirate can use an interference dichroïc infrared filter to prevent the perturbing infrared radiations to enter his camcorder. It is well known that the wavelength cutoff (or the transfer function) of these filters are very sharp. It means that, by choosing adequately the cutoff wavelength of the filter, the removing of the perturbing infrared radiations has no significant impact on the spectral response of the camcorder for the visible wavelength, notably in the red region of the metameric colors. But these interference dichroïc filters are reflective and can be considered as an infrared mirror. The perturbing infrared radiations that are cut by the filter are then reflected, generally toward the projection screen. It is then easy, as explained below with more details, to detect the camcorder and the pirate from these reflected infrared radiations.
- the pirate can use another type of infrared filter that is not reflective, i.e. an absorbing filter. But, it is well known that the wavelength cutoff (or the transfer function) of these filters are not sharp. It means that, even by choosing adequately the cutoff wavelength of the filter, the removing of the perturbing infrared radiations will infer some removing of red wavelengths, then impacting the spectral response of the camcorder. As images are displayed by using different metameric colors that are visually-equivalent but have different spectral wavelength distributions at least in the red region of wavelengths, the metameric jamming effect will then be enhanced, dissuading the pirate to use this absorbing infrared filter.

Finally, thank to the method of displaying images according to the invention, the pirate has no choice, except installing an interference dichroïc infrared filter but being detected and risking to be prosecuted before the courts, or installing an absorbing infrared filter but being exposed to enhanced metameric jamming of the captured images, notably because the metameric colors have different spectral wavelength distributions in a region that is closed to the infrared region, in a range of visible wavelengths where the absorbing infrared filter absorbs significantly.

More details is now given to detect the camcorder in the place for the audience through the reflections of the perturbing infrared radiations by the infrared interference filter that the pirate may have placed in front of his camcorder in the audience. One very simple solution, already mentioned above, is to ask the theater's employees to wear infrared glasses so they can easily scan for any infrared spot on the projection screen or anywhere in the theater that comes from the reflection of the perturbing infrared radiations by the infrared interference filter, and then finally detect the camcorder itself and the pirate. A more reliable solution is to install in the theater at least one infrared videomonitoring camera to detect any infrared spot on the projection screen that may come from the reflection of the perturbing infrared radiations by the infrared interference filter, then allowing the detection of the camcorder itself and of the pirate.

Displaying of projected images is generally obtained by imag ing on the projection screen at least an imager that is able to modulate a light beam that illuminates this imager. The colors of the images are generally obtained by using at least three basic primary colors for the at least one illuminating beam of the imager. To get different metameric red colors that are visually-equivalent but have different spectral wavelength distributions at least in the red region of wavelengths as required for the invention, at least four basic primary colors are generally needed.

Preferably, the different metameric colors that are visually-equivalent are obtained by using four basic primary colors, two of which are themselves visually-equivalent and metameric and have different spectral wavelength distributions at least in the red region of wavelengths. Preferably, these two metameric primary colors are red.

Such an improvement allow to display images by using standard image data that are normally dedicated to display images by using only three basic primary colors, generally red, green and blue. As a matter of fact, the "red" image data, that are normally dedicated to the control of the red standard basic primary color of a display device, can be used here unthinking to control either the first or either the second red basic primary colors, because they are visually-equivalent and metameric.

Again, colors are visually-equivalent and metameric as soon as they have the same coordinates in a visual color space, as the CIE1931 XYZ color space, or Lab color space, although they have different spectral wavelength distribution. According to a first basic variant, an object of the invention is also an image display system that is able to implement an image display method according to the invention, comprising:

- a projection screen in front of a place for an audience,
- a projection display device comprising itself :

    - > at least one imager that is able to modulate an illuminating beam of at least one basic primary color so as to generate images to display according to image data related to said basic primary color,
    - > at least one projection lens to image the at least one imager onto said projection screen,
    - > means to generate an illuminating beam able to illuminate each imager, with four illuminating basic primary colors, two of those having different spectral wavelength distributions at least in the red region of wavelengths,
    - > means to generate image data related to each of said illuminating basic primary colors, adapted to produce, through the modulation provided by said at least one imager, images to display onto said projection screen and to produce on this projection screen different visually-equivalent metameric colors for different portions of images to display and/or for different images of the series of images to display,

- a perturbing source of perturbing infrared radiations adapted to illuminate the place of the audience,
- a detection system of perturbing infrared radiations adapted to detect reflections of perturbing infrared radiations coming from the place of the audience.

Generally, the projection display device comprises at least three imagers, one for each primary color. Each illuminating beam of one imager has its own basic primary color. These illuminating beams of different basic primary colors can be obtained directly, for instance from an appropriate array of LEDs, or indirectly through a chromatic-and-spatial separation of a polychromatic beam coming, for instance, from an arc-discharge lamp.

If the projection display device comprises only one imager, the color of the illuminating beam of this imager has to change successively from one basic primary color to another, quickly enough to allow the human eye to merge the different basic primary images which are then successively projected onto the projection screen. An arc-discharge lamp may be used as a light source, with the very usual color wheel as a means to generate four illuminating basic primary colors.

As a variant, the projection display device comprises only two imagers, one only dedicated for instance to the green and to the blue basic primary colors, the other one then dedicated to a red and to a yellow basic primary color.

The perturbing source of perturbing infrared radiations is generally an infrared projector or a set of infrared projectors as disclosed in US2002-171813 and

US6018374 already quoted. These infra-red projectors are advantageously placed behind the projection screen as to able to illuminate the audience through this projection screen. As a variant, the infrared projector may scan successively different parts of the audience, or may emit intermittently, then allowing using a less powerful projector.

According to a second basic variant, an object of the invention is also an image display system that is able to implement an image display method according to the invention, comprising:

- a projection screen in front of a place for an audience,
- a projection display device comprising itself :

    - > at least one imager that is able to modulate an illuminating beam of at least one basic primary color so as to generate images to display according to image data related to said basic primary color,
    - > at least one projection lens to image the at least one imager onto said projection screen,
    - > means to generate an illuminating beam able to illuminate each imager, with four illuminating basic primary colors, two of those being visually-equivalent and metameric, and having different spectral wavelength distributions at least in the red region of wavelengths,
    - > means to generate image data related to each of said illuminating basic primary colors, adapted to produce, through the spatial modulation provided by said at least one imager, the images to display onto said projection screen,

- a perturbing source of perturbing infrared radiations adapted to illuminate the place of the audience,
- a detection system of perturbing infrared radiations adapted to detect reflections of perturbing infrared radiations coming from the place of the audience.

Advantageously, because two of the four basic primary colors are themselves visually-equivalent and metameric, it is not necessary to generate specific image data to produce different visually-equivalent metameric colors for different portions of images to display and/or for different images of the series of images to display; when, as preferred, the two basic primary colors that are metameric are red, the two other ones being then respectively green and blue, the, using the usual red image data to control the imager(s) that is/are adapted to modulate the illuminating beam(s) having the two red illuminating basic primary colors will automatically produce these different visually-equivalent metameric colors without further processing of the image data.

Preferably, said detection system of perturbing infrared radiations comprise at least one infrared videomonitoring camera, in order to be able to detect any infrared spot on the projection screen that may come from the reflection of the perturbing infrared radiations by any object in the audience, notably by an infrared interference filter that a pirate may have installed in front of his camcorder, then allowing the detection of the camcorder and of the pirate.

As the perturbing infrared projectors would likely be placed behind the projection screen or around it, as the infrared interference filter of a camcorder will likely be parallel to the projection screen, the reflections of perturbing infrared radiations on this infrared interference filter being placed in the audience will redirect the perturbing infrared radiations onto the projection screen. Consequently, the videomonitoring camera will be advantageously placed and adapted to have the entire projection screen in its viewing field to be able to detect any infrared spot on this projection screen.

The invention will be more clearly understood on reading the description which follows, given by way of non-limiting example and with reference to the appended figures in which:

- Figure 1 is a diagram illustrating the display method implemented on a first embodiment of the display system according to the invention;
- Figure 2 illustrates a lateral schematic view of a first embodiment of the display system according to the invention;
- Figure 3 illustrates a top schematic view of the same first embodiment;
- Figure 4 illustrates a typical transmission curve of an interference dichroïc infrared filter that a pirate may dispose in front of the lens of his camcorder ;
- Figure 5 illustrates several typical transmission curves of absorbing infrared filters that a pirate may dispose in front of the lens of his camcorder.

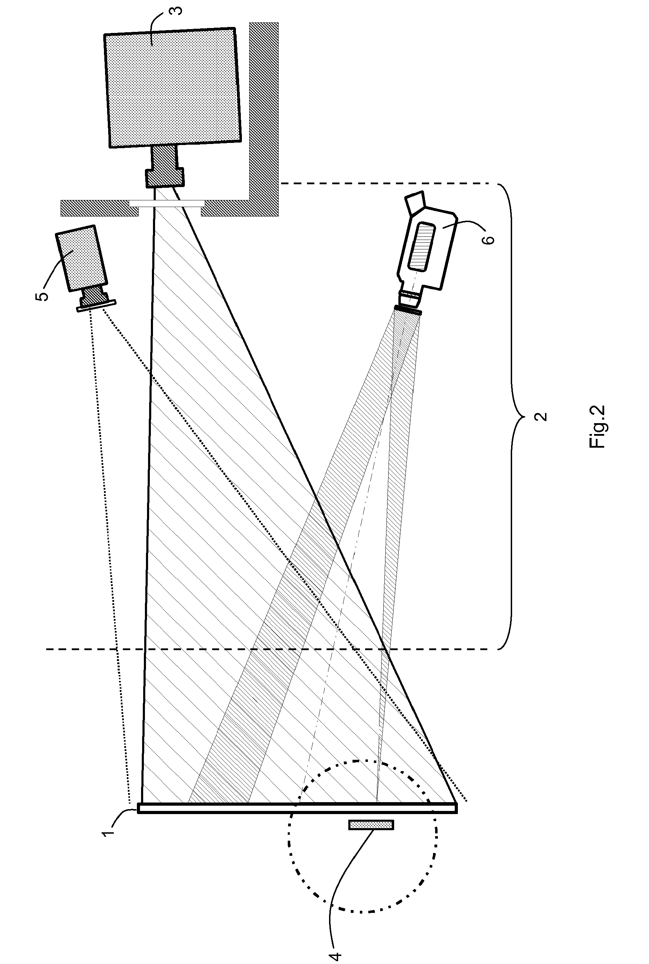

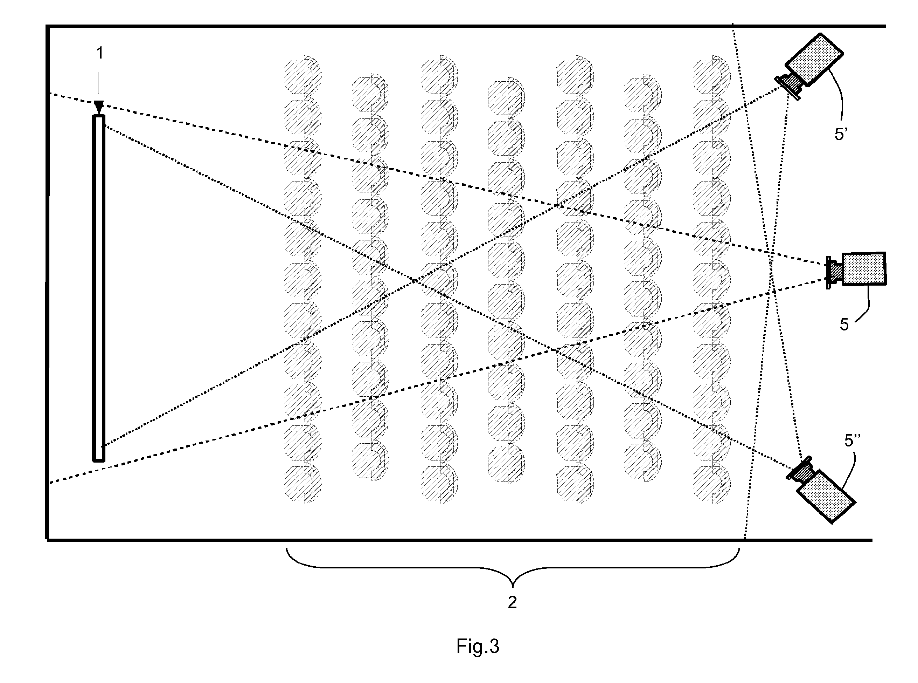

Referring to figure 2 and 3, an image display system according to a first embodiment of the invention comprises :

- a projection screen 1 in front of a place for an audience 2,
- a projection display device 3 adapted to project images onto the projection screen 1;
- a perturbing source 4 of perturbing infrared radiations adapted to illuminate the place of the audience 2,
- a detection system of perturbing infrared radiations adapted to detect, on the projection screen 1, reflections of perturbing infrared radiations coming from the place of the audience 2, comprising a set of video monitoring cameras 5, 5', 5". To display a series of images, the projection display device 3 is adapted to use different visually-equivalent metameric colors for different portions of images of this series and/or for different images of this series; accordingly, this projection display device 3 comprises itself :

- a first, second, third and fourth imager, each imager being able to modulate an illuminating beam of a different basic primary color,
- means to generate an illuminating beam to illuminate each imager, each illuminating beam having a different basic primary color : a first red illuminating beam to illuminate the first imager with a first spectral distribution $R_1(\lambda)$, a second red illuminating beam to illuminate the second imager with a second spectral distribution $R_2(\lambda)$, a green red illuminating beam to illuminate the third imager with a third spectral distribution $G(\lambda)$, and a blue red illuminating beam to illuminate the fourth imager with a fourth spectral distribution $B(\lambda)$;
- a projection lens to image the modulated output of the four imagers onto the projection screen 1, via an optical relay means to combine the image of these fours imagers at the entrance side of the projection lens.

As imagers, liquid crystal microdisplay, for instance LCOS, or digital micromirror devices, for instance so-called "DLP", may be used. Each imager is adapted to spatially modulate its illuminating beam at its entrance so as to provide a primary "microimage" at its output. Such a spatial modulation of each imager associated with one basic primary color is performed according to image data that are related to this basic primary color. All primary "microimages" are then projected simultaneously on the projection screen through the projection lens, then displaying the final image. In a variant, some of the primary "microimages" and even all, may be projected successively on the projection screen, quickly enough for the human eye to get the additive effect of the projected colors of these "microimages".

Usually, each pixel of an image to display is associated with only three image data R, G, B, each image data R, G, B being related to a different standard primary color, respectively the standard red, the standard green and the standard blue. As the imagers of the projection display device 3 are illuminated by four different basic primary colors, at least one of them being not standard, it is necessary to process the three standard image data of each pixel into four image data, each of which being associated with a basic primary color to modulate and an imager to control. Therefore, the projection display device 3 comprises also means to generate image data related to each of the four illuminating basic primary colors, that are adapted to produce, through the modulation provided by the four imagers, primary images that are overlaid onto the projection screen 1 through the projection lens, so as to finally display the images. Moreover, this image data processing is performed, as disclosed in the already quoted documents WO2006/076174, WO2004/040899, EP1590783 and EP1414250, to produce on the projection screen 1, different visually-equivalent metameric colors for different portions of images to display and/or for different images of the series of images to display.

As disclosed in US6742901 and US2002-171813 already quoted, a perturbing source 4 of perturbing infrared radiations is placed behind the projection screen 1 in order to illuminate the place of the audience 2. Any infrared projector or infrared LED may be used for this purpose. The projection screen 1 is adapted to be transparent to these perturbing infrared radiations. Preferably, the range of wavelengths of these perturbing infrared radiations is as close as possible to the visible range of wavelengths. As a variant, the perturbing source 4 may comprise several infrared sources that are distributed behind the projection screen 1. In another variant, some infrared sources may be placed at other locations in the theater, as soon as they illuminate the audience.

One 5 of the three infrared video cameras of the detection system is positioned to have the entire projection screen 1 in its field in order to detect, on this projection screen 1, any reflections of perturbing infrared radiations coming from the place of the audience 2. In order to detect reflections of perturbing infrared radiations not only on the projection screen 1 but also on the lateral walls and on the ceiling of the theater, other infrared video monitoring camera 5', 5" may be used, having these lateral walls or ceiling within their fields. As a variant, instead of this plurality of infrared video monitoring cameras, one scanning infrared monitoring camera may also be used, as soon as it is adapted to scan the projection screen 1, the lateral walls and the ceiling of the theater.

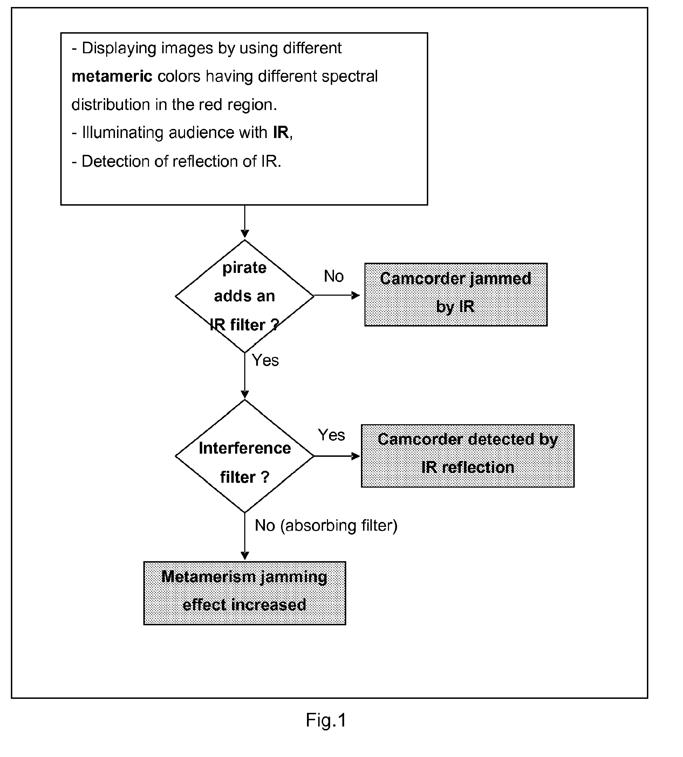

Referring now to figure 1, a method of displaying a series of images using the image display system according to the first embodiment of the invention will now be described, with the objective of preventing or detecting any capture of these images onto the projection screen, by using an image capture device placed in the audience.

As known per se, each pixel of the images to display is provided as a set of *r,g,b* standard image data, each image data being related to a different standard primary color. Using the means to generate image data related to each of the four illuminating basic primary colors of the image projection device 3, each set of three *r,g,b* standard image data is transformed into a set of four $r_1,r_2,g,b$ image data, each transformed image data being related to a different basic primary color of the image projection device 3. This processing is performed in a manner known per se to produce, through the modulation provided by the four imagers, primary images that are overlaid onto the projection screen 1 through the projection lens, so as to finally display the images and to produce different visually-equivalent metameric colors for different portions of these images and/or for different images of the series to display.

The definition of visually-equivalent metameric colors is now reminded with more detail. Let us consider $\overline{x}(\lambda)$, $\overline{y}(\lambda)$ and $\overline{z}(\lambda)$ as the visual colorimetric functions of respectively the red, green and blue component in the CIE1931 XYZ color space.

By controlling the same pixel of each imager with the image data $r_{11}$, $r_{12}$, $g_1$, $b_1$ respectively for the first red, second red, green and blue basic primary colors, the image projection device generates on the projection screen 1 a pixel having a first color $C_1$ defined the following coordinates $X_1$, $Y_1$, and $Z_1$ in the CIE1931 XYZ color space :

$$X_1 = \sum_{400nm}^{700nm}\left[r_{11}.R_1(\lambda)+r_{12}.R_2(\lambda)+g_1.G(\lambda)+b_1.B(\lambda)\right]\overline{x}(\lambda).\Delta\lambda$$

$$Y_1 = \sum_{400nm}^{700nm}\left[r_{11}.R_1(\lambda)+r_{12}.R_2(\lambda)+g_1.G(\lambda)+b_1.B(\lambda)\right]\overline{y}(\lambda).\Delta\lambda$$

$$Z_1 = \sum_{400nm}^{700nm}\left[r_{11}.R_1(\lambda)+r_{12}.R_2(\lambda)+g_1.G(\lambda)+b_1.B(\lambda)\right]\overline{z}(\lambda).\Delta\lambda$$

Similarly, by controlling the same pixel of each imager with different image data $r_{21}$, $r_{22}$, $g_2$, $b_2$ respectively for the first red, second red, green and blue basic primary colors, the image projection device generates on the projection screen 1 a pixel having a second color $C_2$ defined the following coordinates $X_2$, $Y_2$, and $Z_2$ in the CIE1931 XYZ color space :

$$X_2 = \sum_{400nm}^{700nm} [r_{21}.R_1(\lambda) + r_{22}.R_2(\lambda) + g_2.G(\lambda) + b_2.B(\lambda)].\overline{x}(\lambda).\Delta\lambda$$

$$Y_2 = \sum_{400nm}^{700nm} [r_{21}.R_1(\lambda) + r_{22}.R_2(\lambda) + g_2.G(\lambda) + b_2.B(\lambda)].\overline{y}(\lambda).\Delta\lambda$$

$$Z_2 = \sum_{400nm}^{700nm} [r_{21}.R_1(\lambda) + r_{22}.R_2(\lambda) + g_2.G(\lambda) + b_2.B(\lambda)].\overline{z}(\lambda).\Delta\lambda$$

The spectrum of the first color $C_1$ is then represented by the function : $E_1(\lambda)=r_{11}.R_1(\lambda)+r_{12}.R_2(\lambda)+g_1.G(\lambda)+b_1.B(\lambda)$ and the spectrum of the second color $C_2$ is $E_2(\lambda) = r_{21}.R_1(\lambda) + r_{22}.R_2(\lambda) + g_2.G(\lambda) + b_2.B(\lambda)$. If we have $X_1 = X_2$, $Y_1 = Y_2$, and $Z_1 = Z_2$, then the two colors $C_1$ and $C_2$ are perceived by the human eye as the same color, and $C_1 = C_2$. If the two spectral distributions $E_1(\lambda)$ and $E_2(\lambda)$ are different although $C_1 = C_2$, these two colors $C_1$ and $C_2$ are considered as metameric colors for the human eye, i.e. visually-equivalent metameric colors. Therefore, to be able to produce different visually-equivalent metameric colors for different portions of images to display and/or for different images of the series of images to display, it is necessary, for each pixel of these portions and/or of these images being represented by a given set $r_o$, $g_0$, $b_0$ of standard image data and having a given color $C_0$ for the human eye, to find different sets of $r_{11},r_{12},g_1,b_1$; $r_{21},r_{22},g_2,b_2$ transformed image data that give the same given color $C_0 = C_1 = C_2$ for the human eye.

Using the means to generate the illuminating beams, each imager of the projection display device is illuminated by an illuminating beam having a different basic primary color and is controlled by the sets of transformed $r_1,r_2,g,b$ image data in order to spatially modulate its illuminating beam. The projection lens then images the modulated output of the four imagers onto the projection screen 1, then providing the display of the images of the series, by using different visually-equivalent metameric colors for different portions of images of this series and/or for different images of this series.

A camcorder, as any usual image capture device, generally delivers the captured images on three standard channels, respectively R, G, B, one for each of three standard primary colors. Therefore, when a camcorder 6 will be placed in the audience to film the projection screen, it will deliver different set of captured image data $R_1,G_1,B_1$ ; $R_2,G_2,B_2$ for the different visually-equivalent metameric colors that are displayed on this projection screen 1, corresponding respectively to different visual color $C_1$, $C_2$ that will not be perceived as the same color by the human eye. Therefore, the images that are captured are jammed and become useless, then dissuading the pirate to go on filming the projection screen.

Besides the display of images on the projection screen 1, the perturbing source 4 is used to illuminate the place of the audience 2 by perturbing infrared radiations. Contrary to the human eyes of the viewers of the audience, the camcorder will generally capture these perturbing infrared radiations, and the captured images will then be jammed again. Such a jamming process is disclosed in US6742901 and US2002-171813 already quoted.

Then, the pirate has two solutions to protect his camcorder against these perturbing infrared radiations :

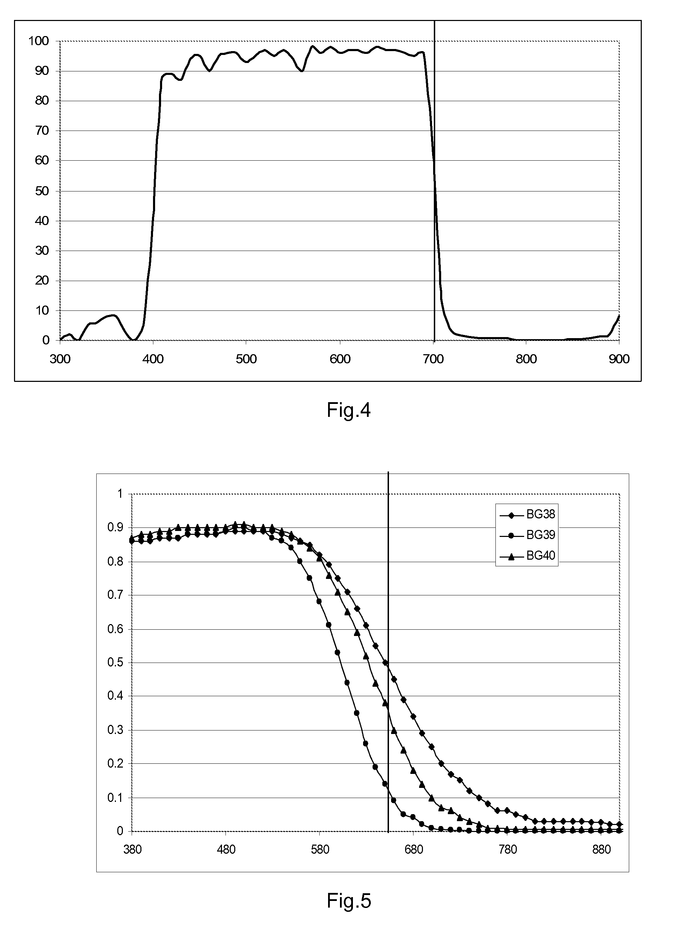

- the pirate can use an interference dichroïc infrared filter to prevent the perturbing infrared radiations to enter his camcorder. Such a filter may have a spectral transmission curve or transfer function as represented on figure 4, with a cutoff wavelength around 700 nm, and a width of this cutoff being less than 30 nm, very providing a very sharp cutoff. Consequently, after having installed this interference dichroïc infrared filter in front of the lens of his camcorder, the camcorder will observe no significant impact on the visual spectral response of his camcorder for the visible wavelength, notably in the red region of the visually-equivalent metameric colors. Therefore, the jamming coming from the metameric effect is not changed.

- the perturbing infrared radiations that are emitted by the perturbing source 4 is now reflected by the interference dichroïc infrared filter that is now installed in front of the lens of the camcorder 6 ; as these perturbing infrared radiations come from the direction of the projection screen 1, as the surface of the interference dichroïc infrared filter is perpendicular to this direction, these perturbing infrared radiations are reflected back toward the projection screen 1, making an infrared light spot on this projection screen 1. The infrared video monitoring camera 5 having the projection screen 1 within its field of view then detects this spot and triggers an alarm adapted to alert an employee of the theater. This employee will then bring adequate actions against the pirate which has been detected. It has to be pointed out that even if the pirate disposes the interference dichroïc infrared filter not perpendicularly to the direction of the projection screen 1, for instance to avoid any infrared light spot on the projection screen 1, this infrared light spot will be projected on the lateral walls or on the ceiling of the theater, where the other infrared video monitoring cameras 5', 5'' of the detection system will detect it similarly.

- in order not to be detected, the pirate can use another type of infrared filter that is not reflective, i.e. an absorbing infrared filter. The spectral transmission curves or transfer functions of such absorbing infrared filters are represented on figure 5, with different cutoff wavelengths. The width of the cutoff of this filter is far higher than that of the previous interference filter. As an example, for a cutoff wavelength of 650 nm, the width of the cutoff is about 150 nm, far higher than 30 nm for the previous interference filter. It means that the absorbing infrared filter absorbs significantly the red colors that are closed to the infrared region. Consequently, after having installed this absorbing infrared filter in front of the lens of his camcorder, because the visually-equivalent metameric colors that are displayed on the projection screen 1 are red colors having a spectral distribution corresponding to a range of wavelengths that significantly intersect the width of the cutoff of this absorbing infrared filter, the camcorder will observe a significant impact on the visual spectral response of his camcorder for the visible wavelength, notably in the red region of the visually-equivalent metameric colors. Therefore, the jamming coming from the metameric effect will be significantly enhanced, forcing the pirate to remove the absorbing infrared filter and to find another solution.

Finally, thank to the method of displaying images according to the invention, the pirate has no choice, except installing an interference dichroïc infrared filter but being detected and risking to be prosecuted before the courts, or installing an absorbing infrared filter but being exposed to enhanced metameric jamming of his captured images, notably because the metameric colors are red colors, closed to the infrared region, in a range of visible wavelengths where the absorbing infrared filters absorb significantly.

An image display system according to a second embodiment of the invention will now be described. The only difference between this system and the system according to the first embodiment are as follows :

- the means to generate the illuminating beams are adapted such that the color $C_{R1}$ associated with the first spectral distribution $R_1(\lambda)$ of first red illuminating beam and the color $C_{R2}$ associated with the second spectral distribution $R_2(\lambda)$ of second red illuminating beam are visually equivalent, i.e. equal, although the first spectral distribution $R_1(\lambda)$ is different from the second spectral distribution $R_2(\lambda)$; it means the first red basic primary color and the second red basic primary color are visually-equivalent and metameric.
- the means to generate image data related to each of the four illuminating basic primary colors are much simpler than before, because they are adapted to simply distribute each set of three standard image data $r_0$, $g_0$, $b_0$ having a given color $C_0$ for the human eye into a set of four image data $r_{01}$, $r_{02}$, $g_0$, $b_0$ having automatically the same color $C_0$ for the human eye as soon as $r_0 = r_{01} + r_{02}$.

The "red" image data $r_0$, that are normally dedicated to the control of the red standard basic primary color of a usual display device, is directly used here, without further processing as performed in the display method described above that uses the display system of the first embodiment, unthinking to control either the first imager or either the second imager, or both first and second imagers that are dedicated to the spatial modulation of the illuminating beams having the red basic primary colors. Such a simplification of the display system and of the display method is possible because the red colors of the red illuminating beams are visually-equivalent and metameric. Such an improvement allow to display images with the display system according to this second embodiment by using standard image data that are normally dedicated to display images by using only three basic primary colors, generally red, green and blue.

Accordingly, it enough that the means to generate image data of the image display device of the system according to this second embodiment is adapted to produce, through the spatial modulation provided by the different imagers, images to display onto said projection screen, they will automatically produce on this projection screen different visually-equivalent metameric colors for different portions of images to display and/or for different images of the series of images to display, as soon as the "red" image data $r_0$, that are normally dedicated to the control of the red standard basic primary color of a usual display device are simply distributed over the two imagers that are illuminated by the metameric illuminating beams.

While the present invention is described with respect to particular examples and preferred embodiments, it is understood that the present invention is not limited to these examples and embodiments. The present invention as claimed therefore includes variations from the particular examples and preferred embodiments described herein, as will be apparent to one of skill in the art. While some of the specific embodiments may be described and claimed separately, it is understood that the various features of embodiments described and claimed herein may be used in combination.

**Claims**

1. Method of displaying a series of images on a projection screen (1) in front of a place for an audience (2), by using different visually-equivalent metameric colors for different portions of images of said series and/or for different images of said series, and by simultaneously illuminating said place for the audience with perturbing infrared radiations and by simultaneously detecting any image capture device (6) in the place for the audience (2), **characterized in that :**

- said different metameric colors that are visually-equivalent have different spectral wavelength distributions at least in the red region of wavelengths,
- said detection is performed through said perturbing infrared radiations that are reflected by any object in the place for the audience (2).

2. Method according to claim 1 **characterized in that** said different visually-equivalent metameric colors are obtained by using four basic primary colors, two of which are themselves visually-equivalent and metameric and have different spectral wavelength distributions at least in the red region of wavelengths.

3. Image display system that is able to implement an image display method according to claim 1, **characterized in that** it comprises:

- a projection screen in front of a place for an audience,
- a projection display device (3) comprising itself :

- > at least one imager that is able to modulate an illuminating beam of at least one basic primary color so as to generate images to display according to image data related to said basic primary color,
- > at least one projection lens to image the at least one imager onto said projection screen,
- > means to generate an illuminating beam able to illuminate each imager, with four illuminating basic primary colors, two of those having different spectral wavelength distributions at least in the red region of wavelengths,
- > means to generate image data related to each of said illuminating basic primary colors, adapted to produce, through the modulation provided by said at least one imager, images to display onto said projection screen and to produce on this projection screen different visually-equivalent metameric colors for different portions of images to display and/or for different images of the series of images to display,
- a perturbing source (4) of perturbing infrared radiations adapted to illuminate the place of the audience,
- a detection system of perturbing infrared radiations adapted to detect reflections of perturbing infrared radiations coming from the place of the audience (2).

4. Image display system that is able to implement an image display method according to claim 2, **characterized in that** it comprises:

- a projection screen (1) in front of a place for an audience,
- a projection display device (3) comprising itself :

- > at least one imager that is able to modulate an illuminating beam of at least one basic primary color so as to generate images to display according to image data related to said basic primary color,
- > at least one projection lens to image the at least one imager onto said projection screen,
- > means to generate an illuminating beam able to illuminate each imager, with four illuminating basic primary colors, two of those being visually-equivalent and metameric, and having different spectral wavelength distributions at least in the red region of wavelengths,
- > means to generate image data related to each of said illuminating basic primary colors, adapted to produce, through the spatial modulation provided by said at least one imager, the images to display onto said projection screen (1),

- a perturbing source (4) of perturbing infrared radiations adapted to illuminate the place of the audience,
- a detection system of perturbing infrared radiations adapted to detect reflections of perturbing infrared radiations coming from the place of the audience.

5. Image display system according to any one of claims 3 and 4, **characterized in that** said detection system of perturbing infrared radiations comprise at least one infrared videomonitoring camera (5, 5').

- Displaying images by using different **metameric** colors having different spectral distribution in the red region.
- Illuminating audience with **IR**,
- Detection of reflection of IR.

```
                    ┌─────────────┐
                    │    pirate   │      No      ┌──────────────────────┐
                    │   adds an   │─────────────▶│  Camcorder jammed    │
                    │  IR filter ?│              │       by IR          │
                    └─────────────┘              └──────────────────────┘
                           │
                          Yes
                           │
                           ▼
                    ┌─────────────┐     Yes      ┌──────────────────────┐
                    │ Interference│─────────────▶│ Camcorder detected by│
                    │   filter ?  │              │     IR reflection    │
                    └─────────────┘              └──────────────────────┘
                           │
                  No (absorbing filter)
                           │
                           ▼
            ┌──────────────────────────┐
            │  Metamerism jamming      │
            │    effect increased      │
            └──────────────────────────┘
```

Fig.1

Fig.2

EP 2 059 039 A1

Fig.3

EP 2 059 039 A1

Fig.4

Fig.5

**European Patent Office**

## EUROPEAN SEARCH REPORT

Application Number

EP 07 30 1519

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,Y | WO 2006/076174 A (EASTMAN KODAK CO [US]; MILLER MICHAEL EUGENE [US]; MURDOCH MICHAEL JOH) 20 July 2006 (2006-07-20)<br>* abstract *<br>* page 1, line 1 - line 22 *<br>* page 3, line 27 - page 5, line 2 *<br>* page 7, line 17 - page 8, line 10 *<br>* page 20, line 29 - line 2 *<br>* page 22, line 5 - line 23 *<br>* figures 1-8 * | 1-5 | INV.<br>H04N5/913<br>H04N9/64 |
| D,Y | WO 2007/005888 A (UNIV SOUTHERN CALIFORNIA [US]; WILL PETER [US]; SCHORR HERBERT [US]) 11 January 2007 (2007-01-11)<br>* abstract *<br>* paragraph [0004] - paragraph [0008] *<br>* paragraph [0011] - paragraph [0017] *<br>* figure 1 * | 1-5 | |
| Y | WO 01/69915 A (DEXRAD PTY LTD [ZA]; TAME GAVIN RANDALL [ZA]) 20 September 2001 (2001-09-20)<br>* abstract *<br>* page 1 - page 2 *<br>* page 5 - page 7 *<br>* figure 3 * | 2-4 | TECHNICAL FIELDS SEARCHED (IPC)<br><br>H04N |
| A | US 2004/081318 A1 (BILOBROV SERGIY [CA] ET AL) 29 April 2004 (2004-04-29)<br>* paragraph [0001] - paragraph [0010] *<br>* paragraph [0031] *<br>* figures 1-6 * | 1-4 | |

-/--

The present search report has been drawn up for all claims

| Place of search | Date of completion of the search | Examiner |
|---|---|---|
| Munich | 22 April 2008 | Schreib, Franz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 059 039 A1

**European Patent Office**

**EUROPEAN SEARCH REPORT**

Application Number

EP 07 30 1519

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 590 375 A (ROVATI PHILIPPE [FR] ET AL) 20 May 1986 (1986-05-20)<br>* abstract *<br>* column 1, line 5 - line 17 *<br>* column 2, line 48 - column 3, line 53 *<br>* figures 1-5 * | 1-5 | |
| D,A | US 6 018 374 A (WROBLESKI WILLIAM J [US]) 25 January 2000 (2000-01-25)<br>* abstract *<br>* figures 1-3 * | 1-5 | |
| D,A | WO 2007/081392 A (THOMSON LICENSING [FR]; YOON YOUNGSHIK [US])<br>19 July 2007 (2007-07-19)<br>* abstract *<br>* page 1, line 5 - page 2, line 15 *<br>* figures 1-4 * | 1-5 | |
| D,A | US 2002/171813 A1 (KIMURA KATSUMI [JP] ET AL) 21 November 2002 (2002-11-21)<br>* abstract *<br>* paragraph [0002] - paragraph [0014] *<br>* figures 1-23 * | 1-5 | TECHNICAL FIELDS SEARCHED (IPC) |
| D,A | US 2006/033017 A1 (LIGHT ELLIOTT D [US] ET AL) 16 February 2006 (2006-02-16)<br>* abstract *<br>* paragraph [0035] - paragraph [0037] *<br>* paragraph [0046] *<br>* figures 1-5 * | 1-5 | |

The present search report has been drawn up for all claims

| Place of search | Date of completion of the search | Examiner |
|---|---|---|
| Munich | 22 April 2008 | Schreib, Franz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 30 1519

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2008

| Patent document cited in search report | | Publication date | Patent family member(s) | | Publication date |
|---|---|---|---|---|---|
| WO 2006076174 | A | 20-07-2006 | US | 2006152524 A1 | 13-07-2006 |
| WO 2007005888 | A | 11-01-2007 | US | 2007013778 A1 | 18-01-2007 |
| WO 0169915 | A | 20-09-2001 | AU | 4096801 A | 24-09-2001 |
| | | | BR | 0109370 A | 04-02-2003 |
| | | | CA | 2402603 A1 | 20-09-2001 |
| | | | GB | 2377408 A | 15-01-2003 |
| | | | US | 2003149873 A1 | 07-08-2003 |
| US 2004081318 | A1 | 29-04-2004 | AU | 2003287229 A1 | 25-05-2004 |
| | | | CA | 2503835 A1 | 13-05-2004 |
| | | | EP | 1557031 A2 | 27-07-2005 |
| | | | JP | 2006505191 T | 09-02-2006 |
| | | | KR | 20050087789 A | 31-08-2005 |
| | | | WO | 2004040899 A2 | 13-05-2004 |
| US 4590375 | A | 20-05-1986 | DE | 3467043 D1 | 03-12-1987 |
| | | | EP | 0127870 A1 | 12-12-1984 |
| | | | FR | 2547059 A1 | 07-12-1984 |
| US 6018374 | A | 25-01-2000 | NONE | | |
| WO 2007081392 | A | 19-07-2007 | NONE | | |
| US 2002171813 | A1 | 21-11-2002 | US | 2003206278 A1 | 06-11-2003 |
| | | | US | 2003206279 A1 | 06-11-2003 |
| | | | US | 2003214640 A1 | 20-11-2003 |
| US 2006033017 | A1 | 16-02-2006 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006076174 A
- WO 2004040899 A
- EP 1590783 A
- EP 1414250 A
- US 6742901 B
- US 2002171813 A
- US 6018374 A
- EP 1460741 A
- US 2004091110 A
- US 6771349 B
- WO 2007081392 A
- WO 2007005888 A
- US 2006033017 A